Europäisches Patentamt

European Patent Office

Office européen des brevets

(19)

(11) **EP 0 662 236 B1**

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(21) Anmeldenummer: **93919134.2**

(22) Anmeldetag: **21.08.1993**

(51) Int Cl.6: **G21C 19/46**, C01G 39/00

(86) Internationale Anmeldenummer:
**PCT/EP93/02250**

(87) Internationale Veröffentlichungsnummer:
**WO 94/07246 (31.03.1994 Gazette 1994/08)**

(54) **VERFAHREN ZUR BEHANDLUNG VON AUFLÖSERÜCKSTÄNDEN**

PROCESS FOR TREATING DISSOLUTION RESIDUES

PROCEDE DE TRAITEMENT DE RESIDUS DE DISSOLUTION

(84) Benannte Vertragsstaaten:
**BE FR GB NL**

(30) Priorität: **24.09.1992 DE 4231955**

(43) Veröffentlichungstag der Anmeldung:
**12.07.1995 Patentblatt 1995/28**

(73) Patentinhaber: **Forschungszentrum Karlsruhe GmbH**
**76133 Karlsruhe (DE)**

(72) Erfinder:
• **SAMEH, Abdel, Hadi, Ali**
**D-76275 Ettlingen (DE)**
• **BERTRAM-BERG, Anne**
**D-76185 Karlsruhe (DE)**

(74) Vertreter: **Rückert, Friedrich, Dr.**
**Forschungszentrum Karlsruhe GmbH**
**Patente und Lizenzen**
**Weberstrasse 5**
**76133 Karlsruhe (DE)**

(56) Entgegenhaltungen:
**EP-A- 0 197 271          FR-A- 1 554 064**
**GB-A- 2 229 312          US-A- 4 701 310**

• **DATABASE WPI Week 8611, Derwent Publications Ltd., London, GB; AN 86-071874 & JP,1 020 899 (ISHIKAWAJIMA) 29. Januar 1986 in der Anmeldung erwähnt**
• **DATABASE WPI Week 8229, Derwent Publications Ltd., London, GB; AN 82-60890E & SU,69 381 088 (REVZIN) 23. Dezember 1981**
• **DATABASE WPI Week 8611, Derwent Publications Ltd., London, GB; AN 86-071874 & JP,1 020 899 (ISHIKAWAJIMA) 29. Januar 1986**

**Beschreibung**

Die Erfindung betrifft ein Verfahren zur Behandlung von Auflöserückständen gemäß dem Oberbegriff des ersten Patentanspruchs.

Zur Gewinnung von Spaltprodukten, insbesondere zur Gewinnung von Spaltmolybdän, sind Kernbrennstoffe, die aus den Elementen Uran, Silizium und Aluminium bestehen, besonders geeignet. Solche Kernbrennstoffe können aus einer Legierung dieser Elemente (z. B. $U_3SiAl$) bestehen oder aus Uransilizid, das von Aluminium oder einer Aluminiumlegierung umhüllt ist.

Der Kernbrennstoff wird in einem Reaktor kurz bestrahlt, wobei sich aus dem im Kernbrennstoff enthaltenen $^{235}U$ Spaltprodukte bilden. Von diesen Spaltprodukten ist insbesondere das radioaktive Isotop $^{99}Mo$ von Interesse, weil aus diesem Isotop durch radioaktiven Zerfall mit einer Halbwertszeit von 66 Stunden das in der medizinischen Diagnostik verwendete Isotop $^{99m}Tc$ entsteht, das seinerseits eine Halbwertszeit von 6 Stunden aufweist.

Werden bestrahlte Kernbrennstoffe dieser Art, z. B. $U_3SiAl$ oder mit Aluminium umhülltes Uransilizid, mit einer Alkalihydroxidlösung behandelt, so wird zwar Aluminium und ein Teil der Spaltprodukte gelöst, jedoch verbleibt ein großer Teil der Spaltprodukte, insbesondere der Hauptteil des Spaltmolybdäns (je nach Partikelgröße des bestrahlten Uransilizid-Kernbrennstoffs zwischen 75 und 85 %) zusammen mit dem Uran und dem Silizium im Auflöserückstand.

Es ist versucht worden (K. A. Burill, R. J. Harrison: "Development of the $^{99}Mo$ process at CRNL"; Proc. of a Tech. Com. Meeting by IAEA from the 13th to 16th October 1987, Karlsruhe, IAEA-TECDOC-515, p. 35), Kernbrennstoffe aus einer bestrahlten $U_3SiAl$-Legierung direkt, d. h. ohne vorhergehende Behandlung mit einer alkalischen Lösung, in Salpetersäure aufzulösen. Hierbei zeigte sich, daß durch die Bildung gelartiger Species aus Kieselsäure Molybdänverluste von bis zu 50% auftreten.

Weiterhin ist versucht worden, (G. F. Vandegrift, J. D. Kwok, S. L. Marshall, D. R. Vissers, J. E. Matos: "Continuing Investigations for technical assessment of $^{99}Mo$ production from LEU targets"; Proc. of a Tech. Com. Meeting by IAEA from the 13th to 16th October 1987, Karlsruhe, IAEA-TECDOC-515, p. 115), den Auflöserückstand, der bei der Behandlung von (unbestrahlten) Kernbrennstoffen dieser Art mit einer alkalischen Lösung entstand, mit einer weiteren Lösung bestehend aus 30%igem Wasserstoffperoxid und Natronlauge in Lösung zu bringen. Hierzu wurde berichtet, daß der Rückstand zwar aufgeschlossen werden konnte, jedoch erhebliche Probleme bei der Vertreibung von überschüssigem Wasserstoffperoxid festgestellt wurden, weshalb sich im weiteren Verlauf des Aufarbeitungsverfahrens das Uran nicht mehr vollständig abtrennen ließ.

Erfahrungsgemäß ist die Behandlung des Auflöserückstands mit einer Lösung von 30%igem Wasserstoffperoxid und Natronlauge ein riskanter Vorgang, weil sich hierbei Wasserstoffperoxid in Gegenwart von Spaltedelmetallen und oxidischen Korrosionsprodukten spontan unter heftiger Verpuffung zersetzen kann.

Aus der EP 0 197 271 A1 ist ein Verfahren zur Herstellung von hochreinem Molybdän- oder Molybdänoxidpulver bekannt, bei dem Molybdän- oder Molybdänoxidpulver mit einer wäßrigen, vorzugsweise 5 bis 35 %igen Wasserstoffperoxid-Lösung behandelt wird, wobei sich eine molybdänhaltige Lösung bildet. Der Wasserstoff-Peroxid-Lösung kann eine starke Mineralsäure zugemischt werden. Die molybdänhaltige Lösung wird in Kontakt mit einem Kationenaustauscher gebracht und anschließend aufkonzentriert. Der Feststoffanteil der aufkonzentrierten Lösung kann mit Wasserstoff zu Molybdän reduziert werden. Das Verfahren geht nicht von Auflöserückständen aus, die bei der Gewinnung von Spaltprodukten, insbesondere von Spaltmolybdän anfallen.

Aus der GB 2 229 312 A ist es bekannt, Aktiniden oder Spaltprodukte mit einer Lösung, die Wasserstoffperoxid und ein Komplexierungsmittel wie Citrat enthält, aufzulösen. Während der Auflösung soll der pH-Wert oberhalb von 5,5 gehalten werden.

Schließlich ist aus World Patent Index Latest, AM: 86-071874/11 zu J 61020899 A, bekannt, Hüllmaterial von Kernbrennstoffen mit anhaftenden Anlagerungen aus Mo etc. in einer alkalischen Lösung von Natriumhydroxid und Wasserstoffperoxid und anschließend mit Salpetersäure aufzulösen.

Der Erfindung liegt die Aufgabe zugrunde, bei einem Verfahren der eingangs genannten Art den Auflöserückstand sicher und möglichst vollständig in Lösung zu bringen, ohne daß sich hierbei Schwierigkeiten in nachfolgenden Verfahrensschritten bei der Isolierung der Spaltprodukte, insbesondere des Molybdäns, und des Urans ergeben.

Die Aufgabe wird durch die im Kennzeichen des ersten Patentanspruchs angegebene Maßnahme gelöst. In den abhängigen Ansprüchen sind vorteilhafte Ausgestaltungen des erfindungsgemäßen Verfahrens beschrieben.

Erfindungsgemäß wird der Auflöserückstand, der bei der Behandlung von bestrahlten Kernbrennstoffen der oben genannten Art mit einer alkalischen Lösung zurückbleibt, mit einer weiteren wäßrigen Lösung aus einer Säure, insbesondere einer anorganischen Säure, Wasserstoffperoxid und Jod oder einer Jodverbindung aufgelöst. Bevorzugt wird als Säure Flußsäure verwendet.

Die Umsetzung mit einer Säure, z. B. mit Flußsäure allein würde nach folgender Formel ablaufen:

$$U_3Si_2 + 24\ HF \rightarrow 3\ UF_4 + 2\ H_2[SiF_6] + 10\ H_2 \tag{1}$$

Ohne die Zugabe von Wasserstoffperoxid wäre die Reaktion jedoch bald beendet, da sich die Uransilizidkristalle mit einer in Säuren (z. B. Flußsäure) schwer löslichen grünen $UF_4$-Schicht umgeben würden, die das weitere Eindringen von Flußsäure verhindern oder zumindest erschweren würde und damit die Reaktion nahezu zum Stillstand brächte.

Bei Anwesenheit von Wasserstoffperoxid wird das gebildete vierwertige Uran in die besser lösliche sechswertige Oxidationsstufe überführt und kann in dieser Form keine Schutzschicht ausbilden, so daß dem weiteren Angriff der Säure kein Widerstand entgegengesetzt wird. Es muß in diesem Fall jedoch mit einem sehr hohen Wasserstoffperoxid-Überschuß gearbeitet werden, da der größte Anteil des Wasserstoffperoxids ungenutzt aus der Lösung entweicht und ständig durch neues Peroxid ergänzt werden muß. Ein solches Vorgehen ist bei der Auflösung von Auflöserückständen, die bei der Aufarbeitung von bestrahltem Kernbrennstoff anfallen, nicht akzeptabel.

Erfindungsgemäß wird deshalb der Lösung, mit der die Rückstände aufgelöst werden, zusätzlich Jod oder eine Jodverbindung zugesetzt. Als Jodverbindung kann insbesondere ein anorganisches, vorzugsweise leicht lösliches Salz eingesetzt werden, in dem Jod in einer beliebigen Oxidationsstufe vorliegt. Eine gut geeignete Jodverbindung ist beispielsweise Kaliumperjodat. Mit dem Zusatz von Perjodat kann Uransilizid rasch und vollständig aufgeschlossen werden, ohne daß Wasserstoffperoxid in starkem Überschuß eingesetzt werden muß.

Wird der Auflöserückstand aus Uransilizid und Spaltprodukten in einer Lösung aufgelöst, die neben der Säure und Wasserstoffperoxid Jod und/oder eine Jodverbindung enthält, so werden die Jodverbindungen unter diesen Bedingungen in elementares Jod überführt. Aus dem elementaren Jod entsteht zusammen mit dem gemäß Reaktionsgleichung (1) entstehenden naszierenden Wasserstoff Jodwasserstoff. Jodwasserstoff reagiert mit dem Wasserstoffperoxid gemäß der Reaktionsgleichung

$$2\ HJ + H_2O_2 \rightarrow J_2 + 2\ H_2O \tag{2}$$

wiederum zu Jod, das erneut den beschriebenen Kreislauf eingeht.

Jod wirkt beim erfindungsgemäßen Verfahren somit als Katalysator; der Katalysator kann auch durch Zugabe einer Jodverbindung erzeugt werden.

Die Lösung, mit der die Auflöserückstände aus der alkalischen Behandlung von bestrahltem Kernbrennstoff weiterverarbeitet werden können, enthält 1 bis 7 mol/l einer Mineralsäure, wobei Flußsäure besonders bevorzugt ist, ferner 5 bis 15 % Wasserstoffperoxid und mindestens 0,01 mol/l Jod und/oder einer Jodverbindung. Konzentrationen von Jod und/oder einer Jodverbindung oberhalb von 0,02 mol/l sind im allgemeinen unnötig und führen zu einer vermeidbaren Verunreinigung der Lösung.

Mit dem erfindungsgemäßen Verfahren kann der Auflöserückstand bei entsprechender Wahl der Konzentration der Lösungskomponenten vollständig aufgelöst werden. Deshalb können alle Spaltprodukte, insbesondere das Spaltmolybdän, vollständig aufgearbeitet werden. Es fallen keine radioaktiven Auflöserückstände an, die prinzipiell noch nutzbare Spaltprodukte enthalten und die zusätzliche Kosten bei der Entsorgung verursachen würden. Ein besonderer Vorzug des erfindungsgemäßen Verfahrens besteht darin, daß die Auflösung sehr rasch erfolgt. Die Auflösezeit des Rückstands ist von der Korngröße abhängig; bei einer mittleren Korngröße von 60 µm ist die Reaktion in 30 Minuten beendet. Somit wird die Zeit, während der das Behältermaterial (meist Edelstahl) dem korrosiven Angriff der Lösung ausgesetzt ist, begrenzt.

Ein weiterer Vorzug des erfindungsgemäßen Verfahrens besteht darin, daß die Auflösung bei niedrigen Temperaturen, beispielsweise bei Temperaturen zwischen 15 °C und 25 °C, durchgeführt werden kann. Durch die niedrigen Betriebstemperaturen wird der korrosive Angriff auf das Behältermaterial weiter vermindert.

Das erfindungsgemäße Verfahren erlaubt bei niedrigen Temperaturen eine betriebssichere, schnell und gleichmäßig ablaufende Umwandlung bestrahlter und unbestrahlter $U_3Si_2$-Legierungen und -Rückstände nach vorhergehender Auflösung bzw. Entfernung der Aluminium- bzw. Aluminiumlegierungsumhüllung. Durch den homogenen Ablauf des Umwandlungsprozesses läßt sich die Beanspruchung des Behälters weitestgehend lokalisieren. Bei Bedarf kann der Teil des Behälters, der mit der weiteren Lösung in Kontakt kommt, z. B. durch vorheriges Besprühen mit einem chemisch inerten Schutzfilm aus Polyethylen oder Polytetrafluorethylen beschichtet und damit gegen Korrosion geschützt werden.

Die Erfindung wird nachfolgend an Hand von Durchführungsbeispielen und Versuchsergebnissen näher erläutert.

Um möglichst realistische Versuchsbedingungen einzuhalten, wurden Rückstände aus alkalischen Aufschlußlösungen von unbestrahlten Uransilizidplatten, wie sie im Produktionsprozess anfallen, verwendet. Die Abtrennung der Auflöserückstände erfolgte an einem Filter.

Mit Rücksicht auf die Erzielung exakter und reproduzierbarer Daten wurde der Auflöserückstand zwecks Beseiti-

EP 0 662 236 B1

gung der mit dem Uransilizid auf dem Filter verbliebenen Behälterkorrosionsprodukte und Hüllmaterialrückstände jeweils 30 Minuten mit 4 molarer Salpetersäure gekocht. Nach dem Filtrieren der Lösung wurde der verbliebene Rückstand solange mit Wasser gewaschen, bis das Waschwasser farblos war. Anschließend wurde der Rückstand aus dem Filtertopf entfernt und in einer Argonschutzgaskammer bei einer Temperatur von ca. 150 °C über Nacht getrocknet. Die nachfolgend aufgeführten Experimente wurden mit Proben aus dem in der Weise vorbereiteten Rückstand durchgeführt.

Der eingewogene Rückstand wurde jeweils mit einer vorgegebenen Menge an Flußsäure, Wasserstoffperoxid und Kaliumperjodat versetzt und für eine vorgegebene Zeit bei 20 °C in Kontakt gehalten.

Am Ende der vorgegebenen Kontaktzeit wurde die Reaktion durch Zugabe eines Überschusses an Kalilauge unterbrochen und die Lösung zur Vertreibung des verbliebenen Wasserstoffperoxids eine Stunde unter Rückfluß gekocht. Dabei fällt das gesamte Uran als Diuranat aus.

Anschließend wurde der Feststoff abzentrifugiert und mehrmals mit Kalilauge gewaschen.

Der Feststoff wurde bei Zimmertemperatur mit 3 molarer Salpetersäure behandelt. Dabei löste sich das Diuranat auf, während je nach den gewählten Versuchsbedingungen ein schwarzer Rest aus nicht aufgeschlossenem Uransilizid zurückblieb. Nach dem Abzentrifugieren dieses Rests wurde in der Salpetersäurelösung der Gehalt an Uran bestimmt. Die Salpetersäurelösung ist die erste Meßlösung und wird mit M1 bezeichnet.

Der nicht umgesetzte Rest wurde gesondert mit einer Lösung behandelt, die aus 5 molarer Flußsäure, 2,45 molarer Wasserstoffperoxid und 0,05 molarem Kaliumperjodat bestand, wodurch innerhalb von 15 Minuten eine vollständige Auflösung des Restes erreicht wurde. Die Lösung wurde wie oben beschrieben mit einem Überschuß an Kalilauge versetzt. Diese Lösung ist die zweite Meßlösung und wird mit M2 bezeichnet.

Die Urankonzentrationen in den jeweils zueinander gehörenden Meßlösungen M1 und M2 wurden UV-spektroskopisch durch Vergleich mit Uranstandardlösungen in [mol/l] ermittelt und anschließend, durch Berücksichtigung ihrer jeweiligen Volumina, in [mol] umgerechnet. Aus den Meßproben M1 und M2 erhält man den Gesamturangehalt und daraus den prozentualen Urangehalt in M1 bezogen auf die behandelte Gesamtmenge des Urans ($U_{ges}$).

Zur Abhängigkeit der Auflöserate von der Kaliumperjodat-Konzentration:

Die Versuche wurden mit 5 molarer Flußsäure in 7,5 %igem Wasserstoffperoxid durchgeführt. Die Kontaktzeit zwischen der Lösung und dem Rückstand betrug 15 Minuten.

Konzentration von:

| $KJO_4$ [mol/l] | Uran in M1 [$10^{-3}$mol/l] | Uran in M2 [$10^{-3}$mol/l] | $U_{ges}$ [$10^{-3}$mol/l] | Uran in M1 [%] von $U_{ges}$ |
|---|---|---|---|---|
| 0 | 0,135 | 0,44 | 0,575 | 23,47 |
| 0,0011 | 0,161 | 0,35 | 0,511 | 31,37 |
| 0,0029 | 0,225 | 0,317 | 0,542 | 41,5 |
| 0,0054 | 0,357 | 0,354 | 0,711 | 50,21 |
| 0,0073 | 0,366 | 0,266 | 0,632 | 57,91 |
| 0,0093 | 0,44 | 0,172 | 0,612 | 71,89 |
| 0,0118 | 0,595 | 0,118 | 0,713 | 83,43 |
| 0,0147 | 0,522 | 0,010 | 0,532 | 98,15 |
| 0,0205 | 0,541 | 0 | 0,541 | 100,00 |

Aus diesen Daten geht hervor, daß mit einer Lösung, die Flußsäure und Wasserstoffperoxid in den oben angegebenen Konzentrationen sowie Kaliumperjodat in einer Konzentration von mindestens 0,02 mol/l enthält, Uransilizid vollständig aufgelöst werden kann. Selbst mit einer Lösung, die nur 0,01 mol/l Kaliumperjodat enthält, wird der überwiegende Anteil des Uransilizids aufgelöst.

Zur Abhängigkeit der Auflöserate von der Kontaktzeit

Die Versuche wurden mit 5 molarer Flußsäure, 7,5 %igem Wasserstoffperoxid und 0,0093 mol/l Kaliumperjodat durchgeführt.

Konzentration von:

| Zeit [min] | Uran in M1 [$10^{-3}$mol/l] | Uran in M2 [$10^{-3}$mol/l] | $U_{ges}$ [$10^{-3}$mol/l] | Uran in M1: [%] von $U_{ges}$ |
|---|---|---|---|---|
| 10 | 0,277 | 0,254 | 0,531 | 52,16 |
| 15 | 0,44 | 0,172 | 0,612 | 71,89 |
| 20 | 0,578 | 0,144 | 0,722 | 80,06 |
| 25 | 0,524 | 0,067 | 0,591 | 88,70 |
| 30 | 0,966 | 0,090 | 1,056 | 91,47 |

Aus diesen Daten geht hervor, daß innerhalb einer Kontaktzeit von 30 Minuten auch dann mehr als 90 % des Uransilizids in Lösung geht, wenn das Lösungsmittel lediglich ca. 0,01 mol/l Kaliumperjodat enthält.

Zur Abhängigkeit der Auflöserate von der Konzentration von Wasserstoffperoxid

Die Versuche wurden mit 5 molarer Flußsäure und 0,0093 mol/l Kaliumperjodat durchgeführt. Die Kontaktzeit betrug 15 Minuten.

Konzentration von:

| $H_2O_2$ [%] | Uran in M1 [$10^{-3}$mol/l] | Uran in M2 [$10^{-3}$mol/l] | $U_{ges}$ [$10^{-3}$mol/l] | Uran in M1: [%] von $U_{ges}$ |
|---|---|---|---|---|
| 7,5 | 0,44 | 0,172 | 0,612 | 71,89 |
| 6,0 | 0,328 | 0,191 | 0,519 | 63,2 |
| 4,5 | 0,30 | 0,19 | 0,49 | 61,4 |
| 3,0 | 0,248 | 0,22 | 0,468 | 52,99 |
| 1,5 | 0,189 | 0,168 | 0,357 | 52,94 |

Mit sinkendem Wasserstoffperoxidgehalt sinkt die Löslichkeit von Uransilizid.

Zur Abhängigkeit der Auflöserate von der Konzentration der Flußsäure:

Im Bereich von 1 molarer bis 7 molarer Flußsäure konnte kein Unterschied in der Auflöserate festgestellt werden.

**Patentansprüche**

1. Verfahren zur Behandlung von Auflöserückständen, die bei der Gewinnung von Spaltprodukten, insbesondere von Spaltmolybdän anfallen, wenn Kernbrennstoff bestehend aus den Elementen Uran, Silizium und Aluminium bestrahlt und anschließend mit einer alkalischen Lösung behandelt wird und danach die Lösung von den entstehenden Auflöserückständen abgetrennt wird, bei dem

   - die Auflöserückstände mit einer weiteren, Wasserstoffperoxid enthaltenden Lösung aufgelöst werden,

   dadurch gekennzeichnet, daß

   - der weiteren, Wasserstoffperoxid enthaltenden Lösung eine Säure und Jod oder eine Jodverbindung zugesetzt werden.

2. Verfahren nach Anspruch 1, dadurch gekennzeichnet, daß die Säure Flußsäure ist.

3. Verfahren nach Anspruch 1, dadurch gekennzeichnet, daß die Jodverbindung ein leicht lösliches anorganisches Salz darstellt.

4. Verfahren nach Anspruch 3, dadurch gekennzeichnet, daß das leicht lösliche anorganische Salz ein Perjodat ist.

5. Verfahren nach einem der Ansprüche 1 bis 4, dadurch gekennzeichnet, daß die Auflöserückstände mit der weiteren Lösung bei einer Temperatur zwischen 15 °C und 25 °C aufgelöst werden.

6. Verfahren nach einem der Ansprüche 1 bis 5, dadurch gekennzeichnet, daß zur Durchführung des Verfahrens ein metallischer, innen mit einem inerten Schutzfilm beschichteter Behälter eingesetzt wird.

**Claims**

1. Method of treating dissolution residues which occur during the recovery of fission products, more especially fission molybdenum, when nuclear fuel, comprising the elements uranium, silicon and aluminium, is irradiated and subsequently treated with an alkaline solution, and then the solution is separated from the resultant dissolution residues, wherein

   - the dissolution residues are dissolved with an additional solution containing hydrogen peroxide,

characterised in that

- an acid and iodine or an iodine compound are added to the additional solution containing hydrogen peroxide.

2. Method according to claim 1, characterised in that the acid is hydrofluoric acid.

3. Method according to claim 1, characterised in that the iodine compound is an easily soluble, inorganic salt.

4. Method according to claim 3, characterised in that the easily soluble, inorganic salt is a periodate.

5. Method according to one of claims 1 to 4, characterised in that the dissolution residues are dissolved with the additional solution at a temperature of between 15° C and 25° C.

6. Method according to one of claims 1 to 5, characterised in that a metallic container, coated internally with an inert protective film, is used for accomplishing the method.


**Revendications**

1. Procédé de traitement de résidus de dissolution qui apparaissent, lors de l'obtention de produits de fission et en particulier de molybdène de fission, lorsqu'on irradie du combustible nucléaire se composant des éléments uranium, silicium et aluminium, puis qu'on le traite avec une solution alcaline et qu'ensuite la solution est séparée des résidus de dissolution qui se forment, procédé dans lequel, les résidus de dissolution sont dissous avec une autre solution contenant du peroxyde d'hydrogène,
caractérisé en ce que
à l'autre solution contenant du peroxyde d'hydrogène, on ajoute un acide et de l'iode ou un composé d'iode.

2. Procédé selon la revendication 1,
caractérisé en ce que
l'acide est l'acide fluorhydrique.

3. Procédé selon la revendication 1,
caractérisé en ce que
le composé d'iode est un sel minéral facilement soluble.

4. Procédé selon la revendication 3,
caractérisé en ce que
le sel minéral facilement soluble est un periodate.

5. Procédé selon l'une des revendications 1 à 4,
caractérisé en ce que
les résidus de dissolution sont dissous avec l'autre solution à une température comprise entre 15°C et 25°C.

6. Procédé selon une des revendications 1 à 5,
caractérisé en ce que
pour l'exécution du procédé, on met en oeuvre un collecteur métallique enduit intérieurement d'un film protecteur inerte.